## Europäisches Patentamt
## European Patent Office
## Office européen des brevets

(19)

(11) Veröffentlichungsnummer : **0 079 601**
**B1**

(12)

# EUROPÄISCHE PATENTSCHRIFT

(45) Veröffentlichungstag der Patentschrift :
21.11.85

(21) Anmeldenummer : 82110491.6

(22) Anmeldetag : 13.11.82

(51) Int. Cl.⁴ : **C 02 F 1/00, C 02 F 3/00**

(54) Vorrichtung zur Abwasserklärung.

(30) Priorität : 16.11.81 DEU 8133468

(43) Veröffentlichungstag der Anmeldung :
25.05.83 Patentblatt 83/21

(45) Bekanntmachung des Hinweises auf die Patenterteilung : 21.11.85 Patentblatt 85/47

(84) Benannte Vertragsstaaten :
AT BE CH DE FR GB IT LI LU NL SE

(56) Entgegenhaltungen :
AT-B-   277 093
DE-B- 1 658 104
DE-B- 2 203 865
DE-C-   555 898
"KLETTERRECHEN" BROSCHÜRE DER FIRMA "MASCHINENFABRIK HELMUT GEIGER", KARLSRUHE, B.R.D.

(73) Patentinhaber : Gebr. Bellmer GmbH & Co. KG, Maschinenfabrik
Hauptstrasse 37
D-7532 Niefern 1 (DE)

(72) Erfinder : Bachmann, Heinrich
Erlenstrasse 6
D-7542 Schömberg-Bieselsberg (DE)
Erfinder : Kollmar, Ulrich
Auf dem Berg 17
D-7531 Pforzheim-Würm (DE)

(74) Vertreter : Frank, Gerhard, Dipl.-Phys. et al
Patentanwälte Dr. F. Mayer & G. Frank Westliche 24
D-7530 Pforzheim (DE)

**Beschreibung**

Die Erfindung betrifft eine Vorrichtung zur Abwasserklärung, bei der eine Rechenharke das Abfallgut erfaßt und aus dem Abwasser transportiert, wobei die Rechenharke Teil eines Gelenkhebel-Systems ist und an einem in einer Führungsbahn verschiebbaren Wagen befestigt ist, und wobei eine Kulissenführung vorgesehen ist, in die mindestens ein Gelenkpunkt des Gelenkhebelsystems eingreift.

Eine derartige Vorrichtung ist aus dem Prospekt « Kletterrechen » der Firma Maschinenfabrik Helmut Geiger, Karlsruhe, bekannt.

Bei dieser vorbekannten Vorrichtung ist die Führungsbahn für den verschiebbaren Wagen gleichzeitig als Kulissenführung ausgestaltet, derart, daß sie eine Zwangsführung des verschiebbaren Wagens in seiner Auf- und Abwärtsbewegung bewirkt. Damit wird eine definierte Positionierung der Rechenharke bei ihrer Aufwärtsbewegung aus dem Abwasserstrom einerseits und ihrer Abwärtsbewegung in den Abwasserstrom andererseits erreicht.

Die vorbekannte Vorrichtung ist jedoch relativ aufwendig, da die Formgebung der gleichzeitig als Führungsbahn und Kulissenführung dienenden Bauteile schwierig ist.

Außerdem hat diese Konzeption unmittelbar zur Folge, daß die Führungsbahn und die Kulissenführung bei vernünftiger Länge der Rechenharke relativ weit in den Abwasserkanal ragen und somit auch einer gewissen Verschmutzung ausgesetzt sind.

Demgegenüber besteht die Aufgabe der Erfindung darin, eine derartige Vorrichtung mechanisch einfacher aufzubauen, so daß sie wartungsarm ist und auch an wechselnden Einsatzorten aufgestellt werden kann.

Diese Aufgabe wird erfindungsgemäß dadurch gelöst, daß die Kulissenführung außerhalb der Führungsbahn vorgesehen ist, und daß mindestens ein Verriegelungsorgan am Wagen angeordnet ist, so daß zumindest zwei Positionen des Gelenkpunktes und damit der Rechenharke fixierbar sind.

Im Unterschied zur vorbekannten Konzeption sind bei der erfindungsgemäßen Lösung die Führungsbahn für den verschiebbaren Wagen einerseits und die Kulissenführung für das Gelenkhebelsystem andererseits baulich voneinander getrennt, so daß gemäß einer Ausbildung der Erfindung die Führungsbahn einfach aus zwei vertikalen Trägern gebildet sein kann und die Kulissenführung als vertikaler Schlitz an den Seiten des Wagens angeordnet sein kann.

Bei dieser besonders vorteilhaften Ausgestaltung ergibt sich eine erhebliche Verkürzung der Kulissenführung, da diese sozusagen mit dem verschiebbaren Wagen « mitfährt » und somit völlig außerhalb der Abwasserrinne angeordnet werden kann.

Gemäß einer weiteren Ausgestaltung der Erfindung ist vorgesehen, daß die Kulissenführung an den vertikalen Trägern angebracht ist ; auch hierbei ergibt sich eine beträchtliche bauliche Vereinfachung gegenüber der bekannten Vorrichtung.

Weitere Ausgestaltungen der Erfindung sind den Unteransprüchen zu entnehmen.

Ein Ausführungsbeispiel der Erfindung wird anhand der Zeichnungen erläutert :

Die Vorrichtung besteht aus einem Traggerüst, das im Wesentlichen aus zwei vertikal angeordneten Trägern 10, 11 (nur einer in der Seitenansicht dargestellt) besteht, die beidseitig des Abwasserkanals 50 aufgestellt sind. Die beiden Träger 10, 11 bilden eine Aufhängung für einen Wagen 12, mit dem sie über in Eingriff stehende Verzahnungen 13 in Verbindung stehen. Der Wagen 12 kann so mit Hilfe eines auf ihm angeordneten Motors 14 die Träger 10, 11 auf- und abfahren.

An den Seiten des Wagens 12 ist ein Gelenkhebelsystem 15 mit seinem oberen Gelenkpunkt 151 angelenkt, wogegen der untere Gelenkpunkt 152 in einer Kulissenführung 16 läuft, so daß sich ein definierter Bewegungsspielraum des Gelenkhebelsystems 15 ergibt.

Dabei ist die Kulissenführung 16 so angeordnet, daß sie im Arbeitseingriff mit einem Anschlag 17 und einem Verriegelungsorgan 19 an den Trägern 10, 11 bzw. am Wagen 12 gebracht werden kann. Diese Organe 17, 19 steuern die Position des unteren Gelenkpunktes 152 in der Kulisse 16 während eines Arbeitszyklus des Wagens 12.

Die Umsetzung der Bewegungen des Wagens 12 und der Schenkel des Gelenksystems 15 zur Erfassung und Entfernung des Abfallgutes 51 aus dem Kanal 50 erfolgt dadurch, daß die Rechenharke 21 mit ihrem Stiel starr an zwei Punkten, insbesondere einem Schenkel, des Gelenksystems 15 angebracht ist.

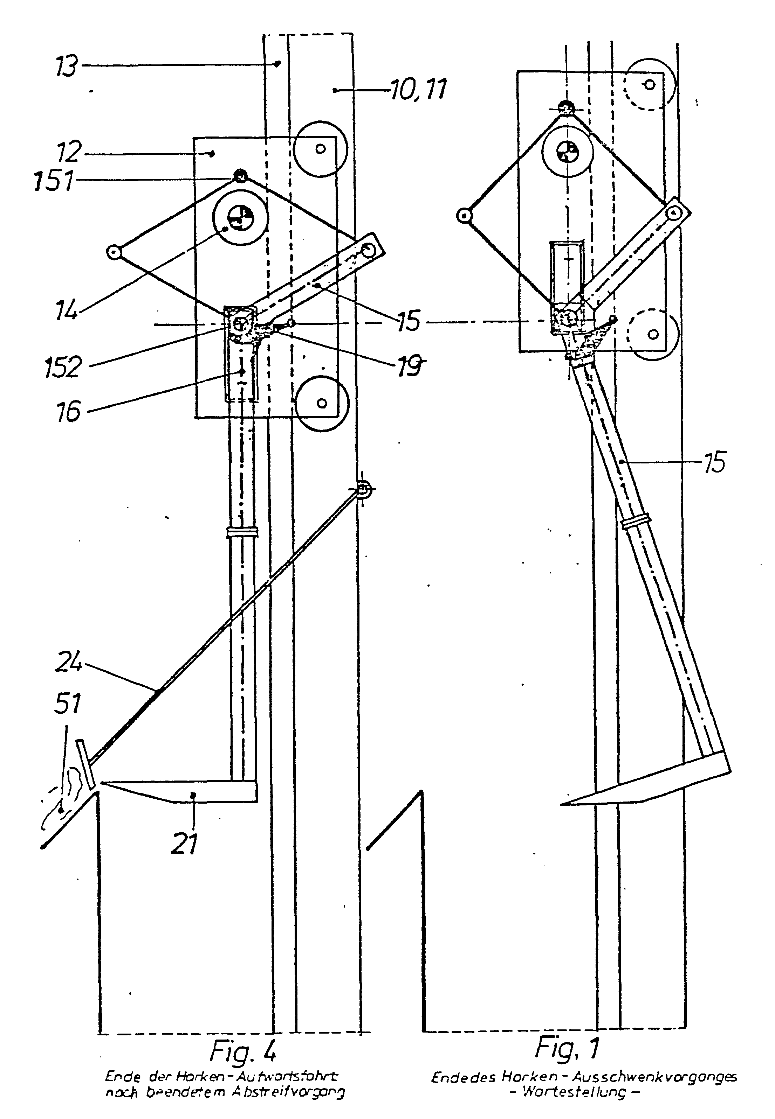

Anhand der Figuren 1-4 wird ein Arbeitszyklus erläutert :

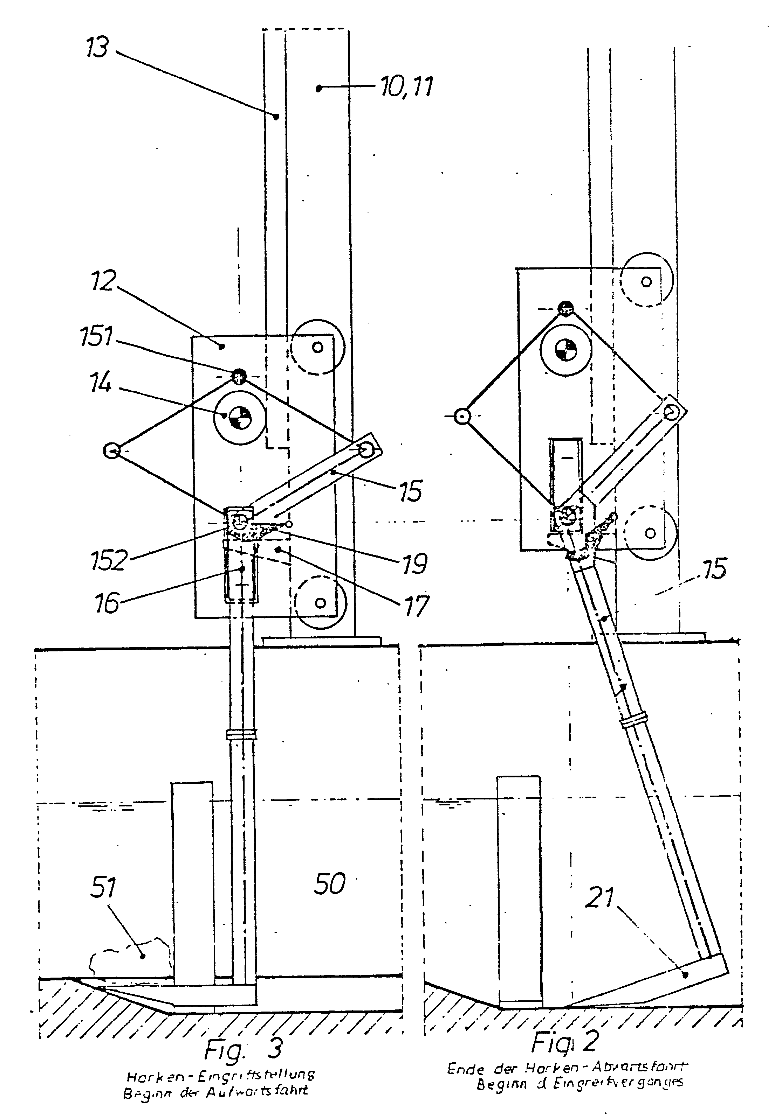

In der Wartestellung (Fig. 1) befindet sich die Rechenharke 21 im ausgeschwenktem Zustand, bzw. der in der Kulissenführung 16 gehaltene untere Gelenkpunkt 152 nimmt dort seine tiefste Position ein. Erhält der Motor 14 ein entsprechendes Steuerkommando, fährt der Wagen 12 abwärts bis in die in Fig. 2 dargestellte Position, wo der untere Gelenkpunkt 152 an einen Anschlag 17 an den Trägern 10, 11 stößt.

Der Wagen 12 fährt nun soweit weiter, bis der untere Gelenkpunkt 152 seine oberste Position in der Kulissenführung 16 eingenommen hat und dort zwischen der Kulissenführung 16 und dem Anschlag 17 festgesetzt ist (Fig. 3), zur Verriegelung ist ein Verriegelungsorgan 19 in Eingriff gebracht.

Durch diese Bewegung des Gelenkhebelsystems schwenkt die Rechenharke 21 in die vertikale Position (Fig. 3), wodurch sich das Abfallgut 51 auf der Rechenharke 21 anhäuft.

In dieser vertikalen Position der Rechenharke 21 fährt der Wagen 12 dann soweit nach oben, bis die Rechenharke 21 eine Höhe erreicht hat, wo das Abfallgut von einem Abstreiforgan 24 in einem Container entfernt werden kann.

Dies wird dadurch gesteuert (Fig. 4), daß die Arretierung des unteren Gelenkpunktes 152 gelöst wird, wodurch infolge des Gewichtes der Rechenharke 21 der untere Gelenkpunkt 152 wieder seine untere Position in der Kulissenführung 16 einnimmt und die Rechenharke 21 wieder nach hinten schwenkt (Fig. 1). Vor dem Abschwenken der Rechenharke 21 schiebt das Abstreiforgan 24 das Abfallgut 51 von der Rechenharke 21 herunter. Damit ist ein Arbeitszyklus beendet.

Beim dargestellten Ausführungsbeispiel sind die Träger 10, 11 vertikal angeordnet, es ist jedoch auch jeder andere Neigungswinkel möglich, wobei dann gegebenenfalls zusätzliche Verriegelungsorgane für den unteren Gelenkpunkt 152 vorgesehen sein müssen.

Der erfindungsgemäße Rechen arbeitet mit einem einfachen mechanischen Aufbau und ist deshalb wartungsarm. Er kann problemlos auch an wechselnden Einsatzorten aufgestellt werden. Nur die mit dem Wasser in Berührung kommenden Teile werden zweckmäßigerweise in Edelstahl ausgeführt.

Infolge der geringen Anzahl bewegter Teile ist der Rechen auch sehr geräuscharm, so daß zusätzliche Schallisolierungen oder Aufstellbeschränkungen entfallen können.

## Patentansprüche

1. Vorrichtung zur Abwasserklärung, bei dem eine Rechenharke (21) das Abfallgut erfaßt und aus dem Abwasser transportiert, wobei die Rechenharke (21) Teil eines Gelenkhebelsystems (15) ist und an einem in einer Führungsbahn verschiebbaren Wagen (12) befestigt ist und wobei eine Kulissenführung (16) vorgesehen ist, in die mindestens ein Gelenkpunkt des Gelenkhebelsystems (15) eingreift, dadurch gekennzeichnet, daß die Kulissenführung (16) außerhalb der Führungsbahn vorgesehen ist, und daß mindestens ein Verriegelungsorgan (19) am Wagen (12) angeordnet ist, so daß zumindest zwei Positionen des Gelenkpunktes (152) und damit der Rechenharke (21) fixierbar sind.

2. Vorrichtung nach Anspruch 1, dadurch gekennzeichnet, daß die Führungsbahn aus zwei vertikalen Trägern (10, 11) besteht, auf denen der Wagen (12) über Verzahnungen (13) geführt ist.

3. Vorrichtung nach Anspruch 1 und 2, dadurch gekennzeichnet, daß der Wagen (12) von einem auf ihm befestigtem Antriebsorgan (14) angetrieben ist.

4. Vorrichtung nach Anspruch 1 und 2, dadurch gekennzeichnet, daß die Kulissenführung (16) als vertikaler Schlitz an den Seiten des Wagens (12) angeordnet ist, und daß an den Trägern (10, 11) Anschläge (17, 18) angeordnet sind, die den Gelenkpunkt (152) innerhalb der Kulissenführung verschieben.

5. Vorrichtung nach Anspruch 1 und 2, dadurch gekennzeichnet, daß die Kulissenführung (16) an den vertikalen Trägern (10, 11) angebracht ist.

## Claims

1. Apparatus for sewage clarification, wherein a rake (21) picks-up waste material and transports it from the sewage, the rake (21) being part of a pivotal lever system (15) and being secured to a carriage (12) which is displaceable in a guide path, and a guide means (16) being provided in which at least one pivotal point of the pivotal lever system (15) engages, characterised in that the guide means (16) is provided externally of the guide path, and in that at least one locking member (19) is provided on the carriage (12), so that at least two positions are fixable for the pivotal point (152) and, hence, for the rake (21).

2. Apparatus according to claim 1, characterised in that the guide path comprises two vertical carriers (10, 11) on which the carriage (12) is guided through the intermediary of toothed portions (13).

3. Apparatus according to claims 1 and 2, characterised in that the carriage (12) is driven by a drive member (14) mounted thereon.

4. Apparatus according to claims 1 and 2, characterised in that the guide means (16) is provided as a vertical slot in the sides of the carriage (12), and in that stop members (17, 18) are disposed on the carriers (10, 11) and displace the pivotal point (152) within the guide means.

5. Apparatus according to claims 1 and 2, characterised in that the guide means (16) is provided on the vertical carriers (10, 11).

## Revendications

1. Dispositif pour l'épuration des eaux usées, dans lequel un râteau (21) saisit les détritus, les transporte hors des eaux usées, le râteau (21) faisant partie d'un système de leviers articulés (15) et étant fixé sur un chariot (12) se déplaçant dans une voie de guidage et un guidage à coulisse (16) étant prévu, dans lequel pénètre au moins un point d'articulation du système de leviers articulés (15), caractérisé en ce que le guidage à coulisse (16) est prévu à l'extérieur de la voie de guidage et au moins un organe de verrouillage (19) est disposé sur le chariot (12) de façon qu'on puisse fixer au moins deux positions du point d'articulation (152) et de ce fait du râteau (21).

2. Dispositif selon la revendication 1, caractérisé en ce que la voie de guidage est constituée de deux supports verticaux (10, 11) sur lesquels le chariot (12) est guidé par l'intermédiaire de dentures (13).

3. Dispositif selon les revendications 1 et 2, caractérisé en ce que le chariot (12) est entraîné par un organe d'entraînement (14) fixé sur lui.

4. Dispositif selon les revendications 1 et 2, caractérisé en ce que le guidage à coulisse (16) est disposé sous forme de fente verticale sur les côtés du chariot (12), et des butées (17, 18) sont disposées sur les supports (10, 11), lesquelles déplacent le point d'articulation (152) à l'intérieur du guidage à coulisse.

5. Dispositif selon les revendications 1 et 2, caractérisé en ce que le guidage à coulisse (16) est disposé sur les supports verticaux (10, 11).

**0 079 601**

*Fig. 4*
Ende der Harken-Aufwartsfahrt
nach beendetem Abstreifvorgang

*Fig. 1*
Ende des Harken-Ausschwenkvorganges
- Wartestellung -

**0 079 601**

Fig. 3
Harken-Eingriffstellung
Beginn der Aufwartsfahrt

Fig. 2
Ende der Harken-Abwartsfahrt
Beginn d. Eingreifvorganges